# EUROPEAN PATENT SPECIFICATION

(11) **EP 0 406 321 B1**
(45) Date of publication and mention of the grant of the patent: **03.01.1996**
(21) Application number: 89904903.5
(22) Date of filing: 21.03.1989
(51) Int. Cl.: B41M 1/30

(54) **ARTICLES HAVING PERMANENT INDICIA THEREON**
GEGENSTÄNDE MIT DAUERHAFTEN INDIZES DARAUF
OBJETS MARQUES D'INDICES PERMANENTS

(30) Priority: 22.03.1988 US 171589
(43) Date of publication of application: 09.01.1991
(73) Proprietor: RAYCHEM CORPORATION, Menlo Park California 94025 (US)
(72) Inventor: CHAN, Chi-Ming, Cupertino, CA 95014 (US); CHAN, Randolph, Winston, Palo Alto, CA 94306 (US); NYBERG, David, Dolph, Sunnyvale, CA 94087 (US)
(74) Representative: DLUGOSZ, A.C. RAYCHEM LIMITED
(86) International application number: US8901166
(87) International publication number: WO8909137

(56) References cited:
- EP-A- 0 076 130
- CH-A- 593 177
- DE-A- 1 806 168
- DE-A- 2 408 820
- DE-A- 2 744 131
- GB-A- 2 110 598
- GB-A- 2 117 270
- US-A- 2 801 447
- US-A- 3 281 259
- US-A- 3 767 538
- US-A- 4 337 183
- US-A- 4 661 305
- WORLD PATENTS INDEX Section Ch, Week 12, Derwent Publications Ltd., London, GB; Class A, AN 79-23337B (12) & JP-B-54 003 906 (SEKISUI CHEMI IND) 28 February 1979

## Description

This invention relates to an article having permanent indicia thereon and to the use of such articles for marking electrical equipment, such as housings, wires and cables. In a preferred embodiment, the article is in the form of a heat recoverable marker sleeve suitable for use in marking wire and cable.

Substrates such as wires, cables, equipment housing and the like are sometimes labeled with marker assemblies comprising a polymeric article marked with indicia, such as letters or numbers or combinations thereof. To identify individual wires of a harness, a marker assembly may comprise a sleeve, preferably heat recoverable, of a polymeric material such as a polyolefin, e.g. polyethylene, polyvinyl chloride, nylon or polyvinylidene fluoride. Relatively flat polymeric articles may be used for similarly marking large diameter cables, electrical equipment or the like. The indicia are generally typed onto the article using typewriting or similar printing equipment. For many uses, the indicia need to be permanent (i.e. durable), e.g. resistant to smearing, to being rubbed off (i.e. abrasion-resistant) and resistant to solvents which may contact the marker, as discussed more fully below. This latter requirement is generally specified for aircraft wiring, which may come into contact with hydraulic fluid, liquid fuel, deicing solvents or the like. The mark is generally rendered permanent by a heat treatment. This heat treatment, referred to as permatization, may take place by placing the sleeve in an oven or subjecting it to infrared radiation or in the case of heat-recoverable sleeves, by the heat applied during the heat-recovery step. See for example U.S. Patent No. 3,894,731 to Evans where infrared radiation is used to permatise the mark and U.K. Patent Application No. 2,181,142 where the mark is rendered permanent on application of heat during a heat shrinking step. An alternative technique of permanently marking wires, cables or the like is the relatively expensive "hot stamping" technique which requires official equipment to mark the wire or cable with heated foil.

One approach for the production of articles with permanent marks without the need for permatization is disclosed in WO-A-88/06520. This application describes a multilayer article comprising a first substantially non-porous polymeric layer bonded to a second porous absorbent, polymeric layer. The porous layer is capable of being marked with indicia which are resistant to organic solvents, smearing or abrasion. Resistance to smearing is defined as the ability of the indicia not to smear or to smear very slightly when rubbed, for example with a thumb, immediately after printing. The multilayer article is relatively complicated to manufacture. One method of manufacturing the article is to bond a first layer of polymeric material to a second layer of polymeric material containing a leachable particulate material and then leaching the particulate material from the second layer to render it porous. As discussed in WO-A-88/06520 various solutions have been proposed for improving printability of polymeric materials but the issue of mark permanence is generally not addressed. (WO-A-88/06520 (= EP-A-0 304 482) constitutes prior art according to Article 54(3)(4) EPC for the designated states BE, CH, DE, FR, GB, IT, NL and SE.)

We have now discovered that an article having a non-porous polymeric surface having certain roughness characteristics is capable of receiving permanent indicia, i.e. indicia resistant to organic solvents, smearing and abrasion.

One aspect of this invention comprises an article for application to a substrate comprising:
(a) unitary article consisting of a polymeric composition having a specific gravity less than about 1.35, a surface of said article having a surface texture characterised by a roughness average of at least about 2µm and an average peak width less than about 200 µm; and
(b) indicia on said surface resistant without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

Another aspect of this invention comprises an article for application to a substrate comprising:
(a) an article having a nonporous surface layer consisting of a polymeric composition having a specific gravity less than about 1.35, and having a surface texture characterised by a roughness average of at least about 2µm and an average peak width less than about 200µm; and
(b) indicia on said surface resistant without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

A further aspect of this invention comprises a method for producing an article having permanent indicia thereon, which method comprises:
(a) selecting a unitary article consisting of a polymeric composition having a specific gravity less than about 1.35, a surface of said article having a surface texture characterised by a roughness average of at least about 2 µm and an average peak width less than 200 µm; and
(b) applying to said surface in the desired pattern an ink containing a particulate pigment thereby placing on the article permanent indicia resistant, without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

Yet another aspect of this invention comprises a method for producing an article having permanent indicia thereon, which method comprises:
(a) selecting an article having a nonporous surface layer consisting of a polymeric composition having a specific gravity less than about 1.35, and having a surface texture characterised by a roughness average of at least about 2µm and an average peak width less than about 200µm; and
(b) applying to said surface in the desired pattern an ink containing a particulate pigment, thereby placing on the article permanent indicia resistant, without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

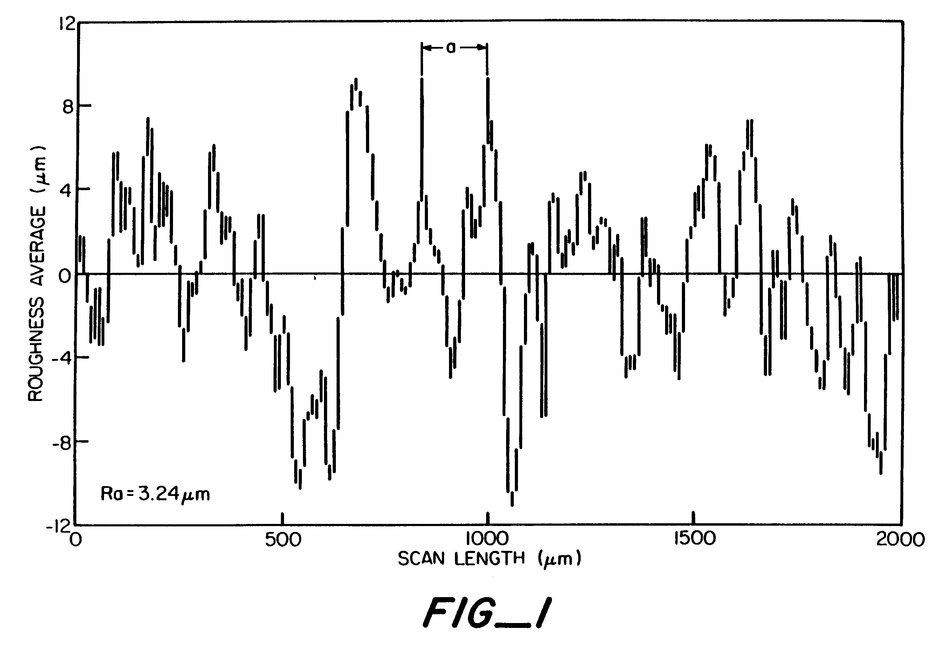

FIGS 1-2 show profilometer tracings, each of a different surface showing the roughness profile of that surface.

In accordance with this invention, permanent marking is obtained by applying an ink to a surface having a surface texture characterised by a roughness average of at least about 2 µm, preferably at least about 2.5 µm and more preferably at least about 3 µm, and an average peak width (i.e. peak-to-peak width) less than about 200 µm, preferably less than 150 µm, most preferably less than 100 µm and in particular less than about 50 µm. The average peak-to-peak width is generally greater than about 1 µm, preferably greater than about 30 µm. The surface texture is measured according to American National Standard ANSI/ASME B46.1-1985 adopted October 7, 1985. In accordance with that standard, the surface texture is measured using a stylus method in which the stylus is a profilometer is passed over the sample surface so as to produce a graph of surface texture. The roughness average is the arithmetic average of the absolute values of the measured profile height deviations taken within the sampling length and measured from the graphical center line. The values of roughness average and peak-to-peak width can vary depending on whether the stylus is moved in the direction of extrusion of the sample or perpendicular to the extrusion direction. The values specified above refer to the value in either direction of the sample.

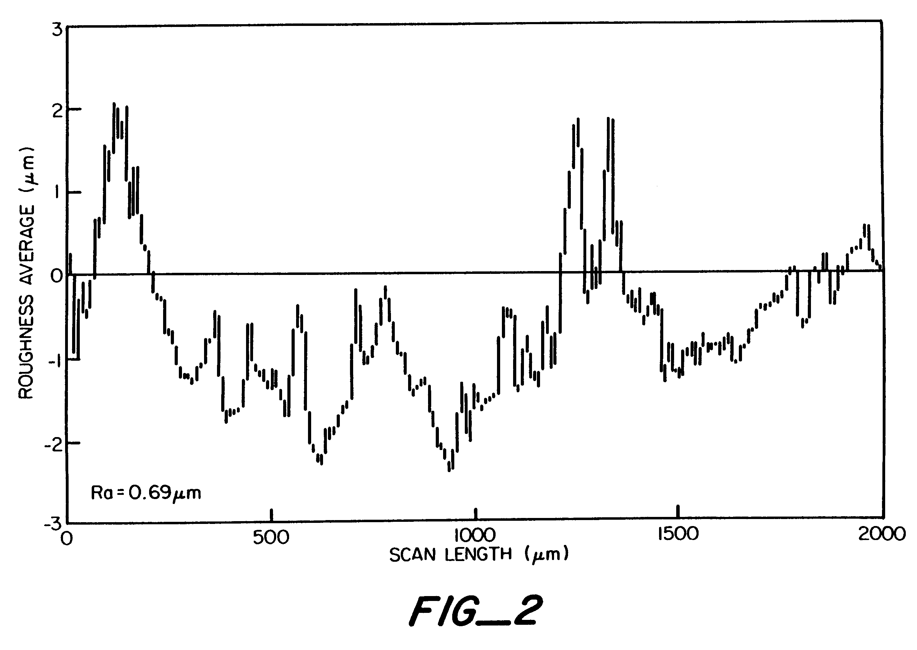

Profilometer tracings of surfaces suitable for receiving permanent indicia are shown in Figures 1 and 2. Figure 2 shows a surface on which permanent indicia are not obtained without permatizing treatment. The average peak width is the arithmetic average of distance between adjacent peaks of tracing. In Figure 1, the distance between one peak and an adjacent peak, i.e. a peak-to-peak width, is shown as "a".

It has been found that permanence of the indicia depends on the texture of the surface to which they are applied. In one embodiment of the invention, the article is a unitary polymeric article, a surface of the article having the requisite surface texture. The term unitary article means an article that consists essentially of the same composition throughout and is generally made as a single layer extrusion. A layer of adhesive or the like can be applied to a surface of the article other than the surface to be printed. Such a layer is not regarded as part of the article. In a second embodiment, the article is a composite article having a nonporous surface layer having the desired texture. Such an article can be for example a dual wall article in which one of the layers has the desired texture. The other layer can be of any other polymeric material, preferably one which bonds to the surface layer. The term nonporous, as used herein, means the substantial absence of pores and voids in the material of the surface layer. The surface layer in this embodiment is preferably at least about 10 micrometres thick. The article can be in the form of a film, sheet, slab, tube or any other shape to accomodate the substrate onto which it is to be applied.

A surface having the desired texture can be produced by extruding the polymeric composition under conditions to obtain melt fracture of the surface. These conditions are governed by the viscoelastic/shear relationship of the composition which depends on the nature of the polymer, the nature of additives and fillers present, or the amounts of such additives and fillers. Extrusion of polymers under conditions to produce melt fracture is well known, see for example, "Capillary Flow of Molten Polyethylene - A photographic Study of Melt Fracture", Transactions of the Society of Rheology, vol. 1, 203 (1957) J.P. Tordella; "A Comparison of Melt Fracture Initiation Conditions in Capillaries and Silts", Journal of Applied Polymer Science, vol 21, 1177 (1977) J. Vlachopulos et al.; "Polymer Flow Instability: A Review and Analysis", J. Macromol. Sci.-Rev. Macromol Chem Vol. 16, 39-77 (1977-1978) E. Boudreaux Jr., et al.; "A Unifield Concept of Melt Flow Instability During Extrusion", J. Applied Polymer Science Vol. 22, 1781-1785 (1978) R.S. Lenk; "Instability in Polymer Processing", AICHE J. Vol. 22, 209-235 (1976) C.J.S. Petrie, et al.; and "Stretching Flow Instabilities at the Exiles of Extrusion Dies", J. of Non-Newtonian Fluid Mechanics Vol. 2, 37-47 (1977), F.N. Cogswell. Other methods of creating the desired surface texture include various physical and chemical treatments of the surface; for example, abrasion of the surface, stretching, laser treatment, ion beam treatment, plasma etching, solvent treatment and the like.

Polymers that can be used include, for example, polyethylene, ethylene copolymers, e.g. ethylene-alkyl acrylate copolymers, such as ethylene-methyl acrylate and ethylene-ethyl acrylate copolymers, polyvinylidene chloride, nylons, such as nylon 66, nylon 11, and nylon 12, polyvinylidene fluoride and vinylidene fluoride copolymers, elastomers, such as butyl rubber, styrenebutadiene copolymers, other co- or terpolymers of the above and compositions comprising various polymer additives and fillers and blends of two or more polymers.

The polymer composition can contain one or more additivet or fillers in an amount of up to about 60% by weight of the polymer, preferably about 0.5 weight % to about 60 weight % and more preferably from about 5 weight % to about 50 weight %. Illustrative fillers and additives include for example, antioxidants such as alkylated phenols, e.g. those commerically available as Goodrite 3125, Irganox 1010, Irganox 1035, Irganox 1076, Irganox 1093, Vulkanox BKF, organic phosphite or phosphates, e.g dilauryl phosphite, Mark 1178, organic sulfides, sudas, dilauryl thiodipropionate, e.g. Carstab DLTDP, dimyristyl thiodipropionate, e.g. Carstab DMTDP,;distearyl thiodiproporionate, e.g Cyanox STDP, amines, e.g. Wingstay 29 etc; UV stabilizers such as [2,2'-thio-bis(4-t-octylphenolato)] n-butylamine nickel, Cyasorb UV 1084, 3, 5-ditertiarybutyl-p-hydroxybenzoic acid, UV Chec Am-240; processing aids, e.g. zinc stearate, silicone oils/resin, PTFE poweder; flame retardants such as decabromodiphenyl ether, perchloropentacyclodecane, 2,2-bis(tetrabromophthalimido) ethylene; inorganic fillers such as titanium dioxide, antimony trioxide, zinc hydroxide, zinc oxide, basic zinc carbonate, iron oxide, etc, and the like. Mixtures of such fillers and additives can be used.

The polymeric composition has a specific gravity of less than about 1.35. Such compositions are specified in certain military specifications such as MIL-I-23053.

For application to individual wires and relatively small diameter cables, the article is preferably in the form of a tubular article, preferably heat-recoverable.

Heat-recoverable articles are articles, the dimensional configuration of which may be made substantially to change when subjected to heat treatment. Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat-stable article is deformed to a dimensionally heat-unstable form in a separate stage.

In the production of heat-recoverable articles, the polymeric material may be crosslinked at any stage in the production of the article that will enhance the desired dimensional recoverability. One manner of producing a heat-recoverable article comprises shaping the polymeric material into the desired heat-stable form, subsequently crosslinking the polymeric material, heating the article to a temperature above the crystalline point or, for amorphous materials the softening point, as the case may be, of the polymer, deforming the article and cooling the article whilst in the deformed state so that the deformed state of the article is heat-unstable, application of heat will cause the article to assume its original heat-stable shape.

The crosslinking can be effected by chemical means, e.g. with peroxides, or by irradiation or a combination of the two. Radiation employed can be of various types including charged particles, e.g. alpha particles or high energy electrons and electromagnetic radiation, e.g. gamma or ultraviolet radiation.

Radiation doses of any desired amount can be used although generally a dosage from 1 to 50, preferably 2 to 20 Mrads will be sufficient.

Illustrative processes for the preparation and use of marker sleeve assemblies can be found, for example, in the U.S. Patents Nos. 3,894,731, 4,349,404 and 4,365,400 and European published application No. 295,918, which constitutes part of the state of the art for the designated EP contracting states AT, BE, CH, DE, FR, GB, IT, NL and SE.

The indicia are applied to the surface using conventional inks. Preferably the ink comprises carbon black in an appropriate vehicle. It is contemplated that any ink containing a pigment having a particle size of about 20 to about 80 micrometres can be used to provide permanent indicia on the surface. While not wishing to be bound by any theory, it is believed that the texture of the surface physically entraps pigment particles preventing them from being dislodged by abrasion of with solvents. Surfaces which do not exhibit the average roughness and peak width values are incapable of receiving permanent marks without a permatizing step, e.g. by heating.

The terms "permanent" and permanent indicia" or "permanent mark" as used herein mean that the indicia, or marks, are resistant to organic solvents, smearing and abrasion without having been subjected to a permatizing step. The degree of permanence required varies depending on the particular application.

For use in wire and harnessing for military use, resistance to organic solvents and abrasion is of paramount importance. In this regard, it is necessary for the marked article to meet the requirements of Military Specification MIL-M-81531 and Military Standard MIL-STD-202, both of which are incorporated by reference herein. With respect to abrasion, Military Specification MIL-M-81531 requires that the markings or indicia be readable after being rubbed with an eraser 20 times.

With respect to resistance to organic solvents, Military Standard MIL-STD-202 requires that the marks or indicia be readable after being immersed in four different organic solvents and then brushed with a toothbrush. The specified organic solvents are: mixtures of isopropyl alcohol and mineral spirits; an azeotrope mixture of trichlorotrifluroethane (FREON TF, a registered trademarks of E.I. DuPont de Nemours) and methylene chloride; 1,1,1-trichloroethane; and an aqueous solution of butyl cellosolve and monoethanolamine.

In addition to meeting the requirements of Military Standard MIL-STD-202, it is preferred that the markings or indicia be resistant to removal during prolonged immersion in the following organic solvents: JP-4 fuel (kerosene), Skydrol (a phosphate ester hydraulic fluid available from Monsanto Company), hydraulic fluid (petroleum based), aviation gasoline, lubricating oil (ester based) and anti-icing fluid (an aqueous mixture of glycols). It is also preferred that the marked article according to the invention is resistant to dichloromethane and FREON mixtures.

It is, of course, anticipated that the marked article according to the invention will be resistant to many other organic solvents as well as many inorganic solvents.

It should be understood, then, that whatever throughout this specification the markings or indicia are stated to be permanent or durable they are resistant to organic solvents, smearing and abrasion, such resistance to organic solvents, smearing and abrasion being defined as indicated above.

The following examples illustrate the preparation of articles in accordance with this invention.

### Example 1.

A formulation was prepared by blending the ingredients listed in Table I in a Banbury at high speed for 10 minutes at about 180°C. The resulting formulation was extruded at 115-163°C in the form of tubing. The tubing was irradiated in an electron accelerator at a dose of 20 Mrads. The tubing was heated to about 150°C and radially expanded, then cooled while maintained in the expanded configuration.

**Table I**

| Component | Percent by Weight |
|---|---|
| Ethylene-methyl acrylate copolymer | 51 |
| Flame retardant combination of: | 40 |
| Decabromo-diphenyl ether | |
| Antimony trioxide | |
| Zinc borate | |
| Magnesium hydroxide | |
| Trimethylol propane trimellitate | 3 |
| Stabilizers | 4 |
| Processing Aid | 2 |
| The composition had a specific gravity of 1.335. | |

The surface texture of the expanded tubing was determined using a Tancor Alpha Step 200 profilometer in accordance with the teaching of ANSI/ASME B46.1-1985. Measurements are made using a stylus having a diameter of 5 µm, under a force of 5 milligrams over a 2000 micrometre (micron) length of sample. Figure 1 shows the profile of the surface of the tubing. The roughness average of the number shown in Figure 1 is 2.9 ± 0.3 in the direction of extrusion and 2.6 ± 0.5 in the direction perpendicular to the extrusion. The average peak-to-peak width is 70 ± 32 in the direction of extrusion and 108 ± 52 in the perpendicular direction.

Indicia were applied to the surface of the tube using black ink containing carbon black or particle size 25 micrometres (25 millimicrons) using a standard impact printer. The indicia were tested for performance using the test procedures set forth above. The indicia were resistant to eraser rubs and the organic solvents.

A slab was pressed of the formulation at 150°C and 172 kPa (25 pounds per square inch) pressure. The surface texture of the slab was determined using a profilometer as above. The roughness average of the sample was 1.0 ± 0.3 µm. The texture is shown in Fig. 2.

Indicia were applied to the surface as set forth above. The indicia were tested for permanence and failed both the eraser rub and solvent resistance testing.

## Claims

1. An article for application to a substrate comprising:
(a) unitary article consisting of a polymeric composition having a specific gravity less than about 1.35, a surface of said article having a surface texture characterised by a roughness average of at least about 2µm and an average peak width less than about 200 µm; and
(b) indicia on said surface resistant without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

2. An article in accordance with Claim 1, wherein said indicia comprise particulate carbon black.

3. An article in accordance with Claim 1, wherein said polymeric surface has an average roughness of at least about 3 µm.

4. An article in accordance with Claim 1, wherein said polymeric surface has an average roughness of about 3 to about 4 µm.

5. An article in accordance with Claim 1, which is in the form of a polymeric tube.

6. An article in accordance with Claim 5, wherein the polymeric tube has been radially expanded after extrusion.

7. An article in accordance with Claim 6, wherein said tube is heat-recoverable.

8. An article in accordance with Claim 1 wherein said polymeric composition comprises an olefin polymer.

9. An article in accordance with Claim 1 wherein said polymeric composition comprises a copolymer of ethylene and an alkyl acrylate.

10. An article in accordance with Claim 9, wherein said polymeric composition further comprises one or more fillers in an amount of about 0.5 to about 60 parts by weight.

11. An article in accordance with Claim 10, wherein said filler comprises at least one flame retardant.

12. An article in accordance with Claim 11, wherein said filler comprises at least one processing aid.

13. An article for application to a substrate comprising:
(a) an article having a nonporous surface layer consisting of polymeric composition having a specific gravity less than about 1.35, and having a surface texture characterised by a roughness average of at least about 2 µm and an average peak width less than about 200 µm; and
(b) indicia on said surface resistant without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

14. A method for producing an article having permanent indicia thereon, which method comprises:
(a) selecting a unitary article consisting of a polymeric composition having a specific gravity less than about 1.35, a surface of said article having a surface texture characterised by a roughness average of at least about 2 µm and an average peak width less than 200 µm; and
(b) applying to said surface in the desired pattern an ink containing a particulate pigment thereby placing on the article permanent indicia resistant, without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

15. A method for producing an article having permanent indicia thereon, which method comprises:
(a) selecting an article having a nonporous surface layer consisting of a polymeric composition having a specific gravity less than about 1.35, and having a surface texture characterised by a roughness average of at least about 2µm and an average peak width less than about 200µm; and
(b) applying to said surface in the desired pattern an ink containing a particulate pigment, thereby placing on the article permanent indicia resistant, without having been subjected to a permatizing step, to organic solvents as defined in U.S. Military Standard MIL-STD-202, abrasion as defined in U.S. Military Standard MIL-STD-81531, and smearing to more than a very slight extent when rubbed with a thumb immediately after printing.

## Patentansprüche

1. Gegenstand zum Aufbringen auf ein Substrat, der folgendes aufweist:
(a) einen einheitlichen Gegenstand, der aus einer polymeren Zusammensetzung besteht, die eine relative Dichte von weniger als ca. 1,35 hat, wobei eine Oberfläche des Gegenstands eine Oberflächenstruktur hat,
gekennzeichnet durch
eine mittlere Rauhigkeit von wenigstens ca. 2 µm und eine mittlere Peak-Breite von weniger als ca. 200 µm; und
(b) Markierungen auf der Oberfläche, die, ohne daß sie einem Schritt zum Permanentmachen unterzogen worden sind, beständig sind gegenüber organischen Lösungsmitteln gemäß der Definition in U.S. Military Standard MIL-STD-202, beständig sind gegen Abrieb gemäß der Definition in U.S. Military Standard MIL-STD-81531 und beständig sind gegen Verschmieren in mehr als einem sehr geringen Maß, wenn sie unmittelbar nach dem Drucken mit einem Daumen gerieben werden.

2. Gegenstand nach Anspruch 1,
wobei die Markierungen teilchenförmigen Ruß aufweisen.

3. Gegenstand nach Anspruch 1,
wobei die polymere Oberfläche eine mittlere Rauhigkeit von wenigstens ca. 3 µm hat.

4. Gegenstand nach Anspruch 1,
wobei die polymere Oberfläche eine mittlere Rauhigkeit von ca. 3 bis ca. 4 µm hat.

5. Gegenstand nach Anspruch 1,
der in Form eines polymeren Schlauchs bzw. Rohres ausgebildet ist.

6. Gegenstand nach Anspruch 5,
wobei der polymere Schlauch bzw. das polymere Rohr nach der Extrusion in Radialrichtung aufgeweitet worden ist.

7. Gegenstand nach Anspruch 6,
wobei der Schlauch bzw. das Rohr wärmerückstellbar ist.

8. Gegenstand nach Anspruch 1,
wobei die polymere Zusammensetzung ein Olefinpolymer aufweist.

9. Gegenstand nach Anspruch 1,
wobei die polymere Zusammensetzung ein Copolymer aus Ethylen und einem Alkylacrylat aufweist.

10. Gegenstand nach Anspruch 9,
wobei die polymere Zusammensetzung ferner einen oder mehrere Füllstoffe in einer Menge von ca. 0,5 bis ca. 60 Gew.-Teilen aufweist.

11. Gegenstand nach Anspruch 10,
wobei der Füllstoff wenigstens ein Flammschutzmittel aufweist.

12. Gegenstand nach Anspruch 11,
wobei der Füllstoff wenigstens ein Verarbeitungshilfsmittel aufweist.

13. Gegenstand zum Aufbringen auf ein Substrat, der folgendes aufweist:
(a) einen Gegenstand, der eine nichtporöse Oberflächenschicht hat, die aus einer polymeren Zusammensetzung besteht, die eine relative Dichte von weniger als ca. 1,35 hat, und der eine Oberflächenstruktur hat,
gekennzeichnet durch
eine mittlere Rauhigkeit von wenigstens ca. 2 µm und eine mittlere Peak-Breite von weniger als ca. 200 µm; und
(b) Markierungen auf der Oberfläche, die, ohne daß sie einem Schritt zum Permanentmachen unterzogen worden sind, beständig sind gegenüber organischen Lösungsmitteln gemäß der Definition in U.S. Military Standard MIL-STD-202, beständig sind gegen Abrieb gemäß der Definition in U.S. Military Standard MIL-STD-81531 und beständig sind gegen Verschmieren in mehr als einem sehr geringen Maß, wenn sie unmittelbar nach dem Drucken mit einem Daumen gerieben werden.

14. Verfahren zum Herstellen eines Gegenstands, der permanente Markierungen darauf hat, wobei das Verfahren die folgenden Schritte aufweist:
(a) Wählen eines einheitlichen Gegenstands, der aus einer polymeren Zusammensetzung besteht, die eine relative Dichte von weniger als ca. 1,35 hat, wobei eine Oberfläche des Gegenstands eine Oberflächenstruktur hat,
gekennzeichnet durch
eine mittlere Rauhigkeit von wenigstens ca. 2 µm und eine mittlere Peak-Breite von weniger als 200 µm; und
(b) Aufbringen einer Farbe auf die Oberfläche in dem gewünschten Muster, wobei die Farbe ein teilchenförmiges Pigment enthält, so daß dadurch auf dem Gegenstand permanente Markierungen angebracht werden, die, ohne daß sie einem Schritt zum Permanentmachen unterzogen worden sind, beständig sind gegenüber organischen Lösungsmitteln gemäß der Definition in U.S. Military Standard MIL-STD-202, beständig sind gegen Abrieb gemäß der Definition in U.S. Military Standard MIL-STD-81531 und beständig sind gegen Verschmieren in mehr als einem sehr geringen Maß, wenn sie unmittelbar nach dem Drucken mit einem Daumen gerieben werden.

15. Verfahren zum Herstellen eines Gegenstands, der permanente Markierungen darauf hat, wobei das Verfahren die folgenden Schritte aufweist:
(a) Wählen eines Gegenstands, der eine nichtporöse Oberflächenschicht hat, die aus einer polymeren Zusammensetzung besteht, die eine relative Dichte von weniger als ca. 1,35 hat, und der eine Oberflächenstruktur hat,
gekennzeichnet durch
eine mittlere Rauhigkeit von wenigstens ca. 2 µm und eine mittlere Peak-Breite von weniger als ca. 200 µm; und
(b) Aufbringen einer Farbe auf die Oberfläche in dem gewünschten Muster, wobei die Farbe ein teilchenförmiges Pigment enthält, so daß dadurch auf dem Gegenstand permanente Markierungen angebracht werden, die, ohne daß sie einem Schritt zum Permanentmachen unterzogen worden sind, beständig sind gegenüber organischen Lösungsmitteln gemäß der Definition in U.S. Military Standard MIL-STD-202, beständig sind gegen Abrieb gemäß der Definition in U.S. Military Standard MIL-STD-81531 und beständig sind gegen Verschmieren in mehr als einem sehr geringen Maß, wenn sie unmittelbar nach dem Drucken mit einem Daumen gerieben werden.

## Revendications

1. Article destiné à être appliqué à un substrat, comprenant :
(a) un article unitaire consistant en une composition polymérique ayant une densité inférieure à environ 1,35, une surface dudit article ayant une texture superficielle caractérisée par une rugosité moyenne d'au moins environ 2 µm et une largeur moyenne de crête inférieure à environ 200 µm ; et
(b) des indices, sur ladite surface, résistants, sans avoir été soumis à une étape de permatisation, à des solvants organiques de la manière définie dans la norme U.S. Military Standard MIL-STD-202, à l'abrasion de la manière définie dans la norme U.S. Military Standard MIL-STD-81531, et à un maculage supérieur à un très faible maculage lors du frottement avec le pouce immédiatement après impression.

2. Article suivant la revendication 1, dans lequel les indices comprennent du noir de carbone en particules.

3. Article suivant la revendication 1, dans lequel la surface polymérique a une rugosité moyenne d'au moins environ 3 µm.

4. Article suivant la revendication 1, dans lequel la surface polymérique a une rugosité moyenne d'environ 3 à environ 4 µm.

5. Article suivant la revendication 1, qui est sous la forme d'un tube polymérique.

6. Article suivant la revendication 5, dans lequel le tube polymérique a été soumis à une expansion radiale après extrusion.

7. Article suivant la revendication 6, dans lequel le tube est doué de reprise dimensionnelle à chaud.

8. Article suivant la revendication 1, dans lequel la composition polymérique comprend un polymère oléfinique.

9. Article suivant la revendication 1, dans lequel la composition polymérique comprend un copolymère d'éthylène et d'un acrylate d'alkyle.

10. Article suivant la revendication 9, dans lequel la composition polymérique comprend en outre une ou plusieurs charges en une quantité d'environ 0,5 à environ 60 parties en poids.

11. Article suivant la revendication 10, dans lequel la charge comprend au moins un retardateur de flamme.

12. Article suivant la revendication 11, dans lequel la charge comprend au moins un adjuvant de traitement.

13. Article destiné à être appliqué à un substrat, comprenant :
(a) un article ayant une couche superficielle non poreuse consistant en une composition polymérique ayant une densité inférieure à environ 1,35, et ayant une texture superficielle caractérisée par une rugosité moyenne d'au moins environ 2 µm et une largeur moyenne de crête inférieure à environ 200 µm ; et
(b) des indices, sur ladite surface, résistants, sans avoir été soumis à une étape de permatisation, aux solvants organiques de la manière définie dans la norme U.S. Military Standard MIL-STD-202, à l'abrasion de la manière définie dans la norme U.S. Military Standard MIL-STD-81531, et à un maculage supérieur à un très faible maculage lors du frottement avec le pouce immédiatement après impression.

14. Procédé de production d'un article portant un indice permanent, procédé qui comprend :
(a) le choix d'un article unitaire consistant en une composition polymérique ayant une densité inférieure à environ 1,35, une surface dudit article ayant une texture superficielle caractérisée par une rugosité moyenne d'au moins environ 2 µm et une largeur moyenne de crête inférieure à 200 µm ; et
(b) l'application à ladite surface suivant le motif désiré d'une encre contenant un pigment en particules, ce qui permet de placer sur l'article les indices permanents résistants, sans avoir été soumis à une étape de permatisation, aux solvants organiques de la manière définie dans la norme U.S. Military Standard MIL-STD-202, à l'abrasion de la manière définie dans la norme U.S. Military Standard MIL-STD-81531, et à un maculage supérieur à un très faible maculage lors du frottement avec le pouce immédiatement après impression.

15. Procédé de production d'un article portant des indices permanents, procédé qui comprend :
(a) le choix d'un article ayant une couche superficielle non poreuse consistant en une composition polymérique ayant une densité inférieure à environ 1,35, et ayant une texture superficielle caractérisée par une rugosité moyenne d'au moins environ 2 µm et une largeur moyenne de crête inférieure à environ 200 µm ; et
(b) l'application à ladite surface suivant le motif désiré d'une encre contenant un pigment en particules, ce qui permet de placer sur l'article permanent des indices résistants, sans avoir été soumis à une étape de permatisation, aux solvants organiques de la manière définie dans la la norme U.S. Military Standard MIL-STD-202, à l'abrasion de la manière définie dans la norme U.S. Military Standard MIL-STD-81531, et à un maculage supérieur à un très faible maculage lors du frottement avec le pouce immédiatement après impression.
